(19) Europäisches Patentamt
European Patent Office
Office européen des brevets

(11) Veröffentlichungsnummer: **0 375 987 A1**

(12) # EUROPÄISCHE PATENTANMELDUNG

(21) Anmeldenummer: **89122142.6**

(51) Int. Cl.5: **C01F 7/06, C01F 7/47**

(22) Anmeldetag: **30.11.89**

Die Bezeichnung der Erfindung wurde geändert (Richtlinien für die Prüfung im EPA, A-III, 7.3).

(30) Priorität: **01.12.88 US 278655**

(43) Veröffentlichungstag der Anmeldung: **04.07.90 Patentblatt 90/27**

(84) Benannte Vertragsstaaten: **AT BE CH DE ES FR GB GR IT LI LU NL SE**

(71) Anmelder: **VEREINIGTE ALUMINIUM-WERKE AKTIENGESELLSCHAFT**
**Georg-von-Boeselager-Strasse 25**
**D-5300 Bonn 1(DE)**

(72) Erfinder: **Brown, Neil Dr.**
**Friedrichstrasse 43**
**D-5300 Bonn 1(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**D-5300 Bonn 1(DE)**

(54) **Verfahren zur Senkung des Gehalts an organischen Bestandteilen in einer alkalischen Aluminatlauge.**

(57) Verfahren zur Senkung der Konzentration organischer Kohlenstoffsubstanzen in einer alkalischen Aluminatlauge aus dem Bayer-Verfahren zur Aluminiumoxidgewinnung aus Bauxit. Das Verfahren besteht aus thermischer Behandlung des Bauxits vor Auflösung in der alkalischen Aluminatlauge, um organische Bestandteile zu zerstören, wobei die thermische Behandlung im wesentlichen den Teil des Gehalts an organischem Kohlenstoff entfernt, der die Natriumoxalatbildung verursacht. Während der Behandlung wird der im Bauxit enthaltene Hydrargillit (Aluminiumtrihydroxid)in eine Form umgewandelt, die eine höhere Löslichkeit in der alkalischen Aluminatlauge aufweist als der ursprüngliche Hydrargillit. Zusätzlich werden die vorliegenden Eisenoxide in eine besser sedimentierende Form umgewandelt, wodurch die Verarbeitung des Bauxits verbessert wird. Die Verwendung von diesem Verfahren erlaubt die Verarbeitung von Bauxiten mit sehr unterschiedlichen Gehalten an organischem Kohlenstoff durch das Bayer-Verfahren, ohne daß die Verbeitungsfähigkeit der Bauxite oder der Anlagenbetrieb beeinträchtigt werden.

EP 0 375 987 A1

## Verfahren zur Senkung des Gehalts an organischem Kohlenstoff in einer alkalischen Aluminatlauge.

Die vorliegende Erfindung betrifft ein Verfahren zur Herabsetzung des Gehaltes von organischen Kohlenstoffverbindungen im Bauxit vor der Behandlung des Bauxits mit einer alkalischen Aluminatlauge aus dem Bayerprozeß, wobei die Umwandlung zu Natriumoxalat herabgesetzt wird. Das Verfahren wandelt auch den im Bauxit vorhandenen Hydrargillit in eine löslichere Form um.

Im Bayer-Prozeß zur Gewinnung von Aluminiumoxid wird das Bauxiterz bei erhöhten Temperaturen und Drucken mit rückgeführter alkalischer Aluminatlauge zur Lösung des Aluminiumoxid behandelt. Der ungelöste Rückstand "Rotschlamm", bestehend vor allem aus Eisenoxiden wie Goethit ($\alpha$ - FeOOH) und Haematit ($\alpha$-$Fe_2O_3$), wird zunächst abgetrennt, beispielsweise durch Filtration, und das Aluminiumhydroxid durch Abkühlung der verbleibenden alkalischen Aluminatlauge abgeschieden. Ein Teil des Aluminiumhydroxids wird als Impfer in die nachfolgenden Ausrührschritte zurückgeführt. Die verbrauchte alkalische Aluminatlauge wird in dem Prozeß zurückgeführt, um weiteres Aluminiumoxid aus neuem Bauxit zu gewinnen.

Etwa 85% der Bauxitvorräte der westlichen Welt befinden sich in den tropischen Regionen (IBA-Review Sept.-Dez., 1987).

Das Aluminiumoxid kommt im tropischen Bauxiten vorwiegend als Hydrargillit [$\alpha$ - $Al(OH)_3$] und Böhmit [$\alpha$ - AlOOH] vor. Beide Formen unterscheiden sich beträchtlich in ihrer Löslichkeit in heißer alkalischer Aluminatlauge. Die vorwiegende $Al_2O_3$ - Form ist Hydrargillit, der sich normalerweise bei Temperaturen von etwa 140 - 150° C und unter Drucken von etwa 6-7 bar auflöst. Dagegen ist Böhmit viel weniger als Gibbsit in den alkalischen Aluminatlaugen löslich und erfordert höhere Aufschlußtemperaturen (240 - 280° C) und Drucke (35 - 50 bar).

Enthält ein Bauxit mehr als 1,5 - 2 Gew.-% Böhmit lohnt sich der zusätzliche Aufwand der Böhmitverwertung, denn die Kosten des Böhmitaufschlusses bei höherer Temperatur werden durch die zusätzliche Aluminiumoxidausbeute gerechtfertigt.

Die technischen und ökonomischen Probleme des Bayerprozesses reichen jedoch über die anfängliche Auswahl der entsprechenden Druck/Temperatur-Bedingungen für den Bauxitaufschluß hinaus. Eines der Hauptprobleme im Bayer-Prozeß stellt die Verunreinigung der alkalischen Aluminatlauge durch die Auflösung und Ansammlung organischer Kohlenstoffsubstanzen aus dem Ausgangsbauxit dar.

Bauxite aus den Tropenregionen enthalten allgemein organische Kohlenstoffsubstanzen im Bereich von 0,1 bis 0,6 Gew.-% C. Während des Aufschlußschrittes lösen sich diese organischen Substanzen auf und reichern sich an, was zu Konzentrationen von 3 bis 30 g/l in der alkalischen Aluminatlauge führt. Die Beeinträchtigungen des Bayer-Prozesses durch die gelösten organischen Verunreinigungen, sind wohlbekannt. Sie umfassen die herabgesetzte Sedimentationsgeschwindigkeit des Rotschlammes, Schäumen der Lauge und organische Karbonisierung, die zu Alkaliverlust durch Natriumkarbonatbildung führt.

Unter der Einwirkung der hohen Alkalikonzentrationen und der hohen Temperaturen während des Bauxitaufschlusses werden die gelösten organischen Substanzen zu Verbindungen mit niedrigem Molekulargewicht abgebaut. Infolgedessen sind in der alkalischen Aluminatlauge sowohl hochmolekulare organische Substanzen wie Huminverbindungen (aus Humus, Erdboden, Pflanzenteilen) als auch die Endprodukte des Abbaues solcher organischen Substanzen, z.B. Natriumoxalat und Natriumkarbonat, vertreten; vergl. K. Yamada, T. Harato und H. Kato: "Oxidation of Organic Substances in the Bayer-Process". Light Metal Conf. Proc., Februar 1981.

Natriumoxalat stellt ein besonderes Problem dar. Etwa 3 bis 20% des organischen Kohlenstoffes des Ausgangsbauxit werden während des Bauxitaufschlusses zu Natriumoxalat umgewandelt, wobei letzteres das einzige Abbauprodukt ist, welches eine Konzentration erreicht, die über seiner Gleichgewichtslöslichkeit liegt. Schwierigkeiten treten auf, wenn das gelöste Natriumoxalat bei Temperaturen und Alkalikonzentrationen der Ausrührung des Aluminiumhydroxid-Produktes auskristallisiert. Das kristalline Natriumoxalat bestimmt dann den Agglomerationsmechanismus bei der Partikelvergrößerung des Produkt-$Al(OH)_3$ und stimuliert die Bildung neuer $Al(OH)_3$ - Kristalle.

Seit langem ist bekannt, daß ein wirkungsvoller Weg zur Lösung des Organica-Problems im allgemeinen darin besteht, den Bauxit vor dessen Aufschluß auf eine so hohe Temperatur zu erhitzen, daß dadurch die organische Kohlenstoffsubstanz thermisch zersetzt wird. Die Beseitigung organischer Substanz aus tropischen Bauxiten verlangt jedoch die Erhitzung auf Temperaturen von mindestens 500° C, vergl. z.B. T.G.Pearson, "The Chemical Background of the Aluminum Industry", The Royal Institute of Chemistry, London, 1955.

Leider führen solche Bedingungen zur Umwandlung von Hydrargillit in Böhmit und andere Aluminiumoxid-Formen wie gamma-$Al_2O_3$ welche weniger löslich sind und sich langsamer als Hydrargillit in alkalischer Aluminatlauge auflösen; siehe z.B. Russell, Edwards und Taylor, J. of Metals, S. 1123-1128,

Oktober 1955.

Aus technischen und ökonomischen Gründen wird deshalb die thermische Zerstörung organischer Substanzen aus dem Bauxit allgemein für wenig attraktiv gehalten.

Im modernen Bayer-Verfahren ist eine vollständige Entfernung der organischen Kohlenstoffsubstanzen aus den alkalischen Aluminatlaugen weder praktisch noch technisch erforderlich. Relativ kleine Mengen organischer Substanzen in der Betriebslauge (z.B. 3-6 g/l) können

- alkalische Aluminatlaugen gegenüber vorzeitiger Abscheidung von Al $(OH)_3$ zwischen den Aufschluß- und Ausrührschritten des Verfahrens stabilisieren; und

die Korngrößenverteilung des $Al(OH)_3$-Produktes gegen exzessive Neukristallbildung durch den sekundären Keimbildungsmechanismus stabilisieren, vgl. z.B. N. Brown, "Kinetics and Mechanism of Secondary Nucleation", Light Metals Conf. Proc., Februar 1977.

Die Technik braucht demnach ein Verfahren, das den Gehalt organischer Kohlenstoffsubstanzen im Bauxit und die Bildungsfähigkeit des Natriumoxalats in den alkalischen Aluminatlaugen unverhältnismäßig stark reduziert, ohne daß dabei Hydrargillit in die weniger löslichen Formen des Aluminiumoxids umgewandelt wird.

Aufgabe der vorliegenden Erfindung ist ein Verfahren zur Herabsetzung der Menge organischer Kohlenstoffsubstanzen im Bauxit zu entwickeln, wobei die Menge der organischen Substanzen im Bauxit gesenkt wird, ohne daß sich Hydrargillit zu weniger löslichen Aluminiumoxidformen umwandelt sondern vorzugweise Hydrargillit in eine löslichere Form überführt wird.

Diese Aufgabe wird gelöst durch:

Erhitzung des Bauxits auf eine vorbestimmte Temperatur während einer vorbestimmten Zeit, um einen Teil des organischen Kohlenstoffes zu zerstören, ohne daß der vorliegende Gibbsit zu einer Form umgewandelt wird, die in der alkalischen Aluminatlauge weniger löslich ist.

Die vorliegende Erfindung bietet ein verbessertes Verfahren zur thermischen Behandlung des Bauxits, das im wesentlichen die vorerwähnten Ziele erreicht.

## Detaillierte Beschreibung der Erfindung

In Übereinstimmung mit der vorliegenden Erfindung werden bei thermischer Vorbehandlung die tropischen Bauxite vor ihrer Einführung in das Bayer-Verfahren auf relativ niedrige Temperaturen von vorzugsweise etwa 300° C bis 400° C, am besten etwa 300° C, während einer relativ kurzen Zeit von etwa 10 bis 120 Minuten, am besten etwa 20 bis 30 Minuten erhitzt, wodurch

- der Gehalt an organischen Kohlenstoffsubstanzen in Bauxit bis um etwa 70% gesenkt werden kann;
- die Oxalatbildung im Bauxit bis um das Zehnfache gesenkt wird,
- der Hydrargillitgehalt des Bauxits in eine Aluminiumoxidform umgewandelt wird, die mindestens 25% löslicher in der alkalischen Aluminatlauge als der Gibbsit ist.

In der Tabelle 1 wird die chemische und mineralogische Zusammensetzung der vier Tropenbauxite gezeigt, auf denen die Arbeit der vorliegenden Erfindung basiert. In Klammern sind die Analysenwerte nach einer 30 minütigen thermischen Behandlung der Bauxite bei 360° C angegeben.

Die chemischen Analysen in Tab. 1 zeigen, daß der organische Kohlenstoff im Bauxit durch die 30-minütige thermische Behandlung bei 360° C auf den Bereich von 0,10 bis 0,14% (bezogen auf das Ausgangsgewicht des Bauxits) reduziert wird. Die Tabelle zeigt auch je höher der Prozentgehalt des organischen Kohlenstoffs im Bauxit ist, um so höher ist die prozentuale Senkung infolge der thermischen Behandlung, wobei der Gehalt an organischem Kohlenstoff in den unterschiedlichen Bauxiten um 41,2 bis 70,8% gesenkt wird.

Überraschenderweise zeigen die mineralogischen Analysen, daß nur beim Boké-Bauxit eine signifikante Menge an neuem Böhmit im Verlauf der thermischen Behandlung entsteht. Darüberhinaus wird der Hydrargillit in den Ausgangsbauxiten (mit Ausnahme von Boké-Bauxit) in eine löslichere röntgenamorphe Phase mit Spuren von chi-Aluminiumoxid umgewandelt. Zusätzlich und vorteilhafterweise findet eine Umwandlung von Goethit ($\alpha$ - FeOOH) zu Haematit ($\alpha$ - $Fe_2O_3$), einer besser sich absetzenden Eisenmineral-Phase, statt.

Wo Böhmit (in Boké-Bauxit) entsteht, ist er bereits bei 300° C anwesend, bis etwa 400° C stabil und fängt danach er an, sich zu gamma-$Al_2O_3$ umzuwandeln.

Tabelle 1

| Mineralogische und chemische Zusammensetzung des Bauxits. *) | | | | | | | | | | |
|---|---|---|---|---|---|---|---|---|---|---|
| | Mineralogische Analysen (Röntgen-Diffraktion) | | | Chemische Analysen | | | | | Organ. Kohlenst. nach therm. Behandlung (original Bauxit-Basis) | Prozent. Verringerung des organ. Kohlenstoffs (original BauBauxit Basis) |
| | Goethit: Haematit Verhältnis | Böhmit (%) | Restl. "$AL_2O_3$" | $Al_2O_3$ (%) | $SiO_2$ (%) | $TiO_2$ (%) | $Fe_2O_3$ (%) | Organ. Kohlenst. (%) | % | |
| Australien - Gove | 13:87 (0:100) | 2 (2) | Hydrargillit; Böhmit (Böhmit; röntgen-armorph) | 49.4 (62.9) | 4.00 (5.21) | 3.22 (4.01) | 17.3 (22.5) | 0.34 (0.18) | (0.14) | 59.8 |
| Australien - Weipa | 0:100 (0:100) | 11 (10) | Hydrargillit; Böhmit (Böhmit; röntgen-armorph) | 53.2 (67.2) | 5.38 (6.48) | 2.76 (3.34) | 13.5 (15.3) | 0.24 (0.14) | (0.11) | 54.2 |
| Afrika - Boké | 70:30 (5:95) | 3 (9) | Hydrargillit; Böhmit (Böhmit; röntgen-armorph) | 57.8 (77.1) | 1.02 (1.29) | 3.65 (4.81) | 6.30 (8.81) | 0.17 (0.14) | (0.10) | 41.2 |
| Jamaica | 100:0 (0:100) | 8 (8) | Hydrargillit; Böhmit (Böhmit; röntgen-armorph) | 47.8 (60.7) | 0.77 (0.94) | 2.39 (3.20) | 19.7 (25.7) | 0.47 (0.18) | (0.14) | 70.8 |

*) Angaben in Klammern wurden nach thermischer Behandlung bei 360 °C während 30 Minuten.

Die Kombination Temperatur/Verweilzeit kann innerhalb des Bereiches von 300 °C bis 400 °C variiert werden, um dieselbe Herabsetzung des organischen Kohlenstoffgehalts wie bei 360 °C-30 Min. zu erreichen. Z.B. wären gleichwertig als höhere Temperatur/kürzere Verweilzeit 380 °C - 20 Minuten und als niedrigere Temperatur längere Verweilzeit 330 °C - 120 Minuten. Bei letzteren Bedingungen findet jedoch die Umwandlung Goethit zu Haematit nicht mehr statt. Temperaturen unterhalb 340 °C, obwohl verwendbar, sind in Wirklichkeit wenig interessant, da dabei die Abbaugeschwindigkeit zu langsam ist und die Umwandlung vom Goethit zu Haematit in einem nennenswerten Umfang nicht mehr stattfindet.

Tabelle 2 gibt die Übersicht der Beziehung Temperatur/Verweilzeit bei einer typischen Bauxitvorbehandlung.

Tabelle 2

| Temperatur | Zeit (Min.) |
|---|---|
| 330 °C | 120 |
| 340 °C | 60 |
| 360 °C | 30 |
| 380 °C | 20 |
| 400 °C | 10 |

Die Temperatur-Zeit Kombinationen wurden experimentell bei 330 °C, 360 °C und 380 °C für jeden Bauxit durch Bestimmungen des Gehaltes an organischem Kchlenstoff in Abhängigkeit von der Zeit (Min.) bei jeder Temperatur ermittelt. Andere Temperatur-Zeit Kombinationen lassen sich aus den Versuchswerten mittels einer Darstellung der Temperatur vs. Zeit extrapolieren.

Ein Vorteil der Temperatur-Zeit Kombinationen aus der Tabelle 2 ist es, daß Drehrohröfen zur Erreichung der benötigten Stufe der thermischen Behandlung verwendet werden können. Weitere Abwandlungen des Grundverfahrens würden die Erhitzung auf höhere Temperaturen, d.h. oberhalb 400 °C mit entsprechend kürzeren Verweilzeiten darstellen. Allgemein läßt sich ein Drehrohrofen für Zeiten länger als 10 Minuten verwenden, ein Wirbelbett für Zeiten von 1 bis 10 Minuten, ein Flash-Kalzinierer für Zeiten unterhalb einer Minute. Beispielsweise bei sehr hohen Temperaturen, z.B. 1000 °C würde man einen Flash-Kalzinierer verwenden, wo der Bauxit in einem vertikalen Rohrreaktor durch eine heiße Zone fällt.

Die gleichen vier Bauxittypen wurden überprüft, um die Auflösung und Umwandlung der organischen Substanzen zu Natriumoxalat aus vorbehandeltem und unbehandeltem Material zu vergleichen. Proben von jedem Bauxit wurde bei 250 °C und 40 bar mit 50 ml einer 5 n NaOH-Lösung in einem Autoklaven aus rostfreiem Stahl aufgeschlossen, und zwar vor und nach einer thermischen Behandlung bei 360 °C in 30 Minuten, zwecks Bestimmung der Menge der organischen Substanzen, welche in Lösung gegangen sind und des Prozentsatzes des zu Oxalat umgewandelten organischen Kohlenstoffs. Der Aufschluß wurde bei 250 °C während 15 Minuten vorgenommen mit einem Einsatzverhältnis von $Na_2O:Al_2O_3$ = 1,4, wobei eine 97%ige Aufschlußausbeute angenommen wurde.

Die so erhaltenen Werte sind in der Tab. 3 angegeben, wobei Angaben in Klammern sich auf das veränderte Verhalten der thermisch bei 360 °C während 30 Minuten behandelten Bauxites beziehen. Alle errechneten Werte sind bezogen auf die organischen Kohlenstoffsubstanzen, welche in den Ausgangsbauxiten vorlagen.

Tabelle 3

| Bauxit-Provenienz | Organischer Kohlenstoff | Org. Kohlenstoff extrahiert | Org. Kohlenst. umgewandelt zu Na-Oxalat |
|---|---|---|---|
| | (%) | (%) | (%) |
| Australien | 0,34 | 56 | 12 |
| - Gove | (0,14)* | (34)* | (1,1)* |
| Australien | 0,24 | 80 | 18 |
| - Weipa | (0,11) | (35) | (4,3) |
| Afrika | 0,17 | 58 | 9,4 |
| - Boké | (0,10) | (37) | (1,3) |
| Jamaica | 0,48 | 85 | 20 |
| | (0,14) | (40) | (3,9) |

* Angaben in Klammern wurden nach thermischer Behandlung ermittelt und bezogen auf den Ausgangsbauxit berechnet.

Wie Tabelle 3 zeigt, folgt der Prozentsatz des organischen Kohlenstoffes, der aus den thermisch vorbehandelten Bauxiten aufgelöst wurde, der Senkung des organischen Kohlenstoffes durch thermische Behandlung. Z.B. wurde der organische Kohlenstoffgehalt in Gove-Bauxit durch thermische Behandlung um 59% gesenkt. Anders ausgedrückt, das Verhalten der organischen Kohlenstoffsubstanzen bezüglich ihrer prozentualen Auflösung wurde durch die thermische Behandlung nicht signifikant beeinflußt. Dieses ähnliche Verhalten trifft jedoch überraschenderweise nicht für den Prozentsatz zu Natriumoxalat umgewandelten organischen Kohlenstoff zu. Man könnte erwarten, daß auch die Umwandlung des verbleibenden organischen Kohlenstoffes etwa denselben Prozentsatz aufweisen würde. Jedoch wurde die Umwandlung zu Natriumoxalat bedeutend herabgesenkt, bei Gove-Bauxit von 12 zu 1,1%, d.h. um 90%. Die thermische Behandlung entfernt daher im wesentlichen jenen Anteil des organischen Kohlenstoffes, der die Natriumoxalatbildung verursacht, was nachfolgend eine Ver- besserung der Produktgewinnung aus dem Bayer-Verfahren nach sich zieht.

Die vorliegende Erfindung wird nachfolgend in besonderen Beispielen beschrieben, die zur Darstellung der Erfindung dienen sollen und deren Bereich nicht einschränken.

Beispiel 1

Organische Substanzen wurden aus allen 4 Bauxitsorten vor und nach der thermischen Behandlung extrahiert und die Bestimmung des "Huminextraktes" und der Umwandlung des organischen Kohlenstoffs zu Natriumoxalat vorgenommen. Die thermische Behandlung dauerte 30 Minuten bei 300 °C. Die Bauxiteinsatzmenge betrug jeweils 2000 g/l, bei thermisch vorbehandelten Bauxiten 1500 g/l. Die Extraktion wurde bei 85 °C in 30 Minuten mit 5 n NaOH unter 1 Atmosphäre Stickstoff vorgenommen. Rückstände wurden vom Extrakt abzentrifugiert. Jeder Extrakt wurde dann hydrothermal behandelt, indem er auf 250 °C erhitzt und bei dieser Temperatur 15 Min. gehalten wurde. Ergebnisse werden in Tabelle 4 gezeigt.

Tabelle 4

| | Unbehandelter Bauxit | | | Therm. behand. Bauxit | | |
|---|---|---|---|---|---|---|
| | Org. Kohlenst. in Lauge (g/l) | Na-Oxalat in Lauge (g/l) | | Org.Kohlenst. in Lauge (g/l) | Na-Oxalat in Lauge (g/l) | |
| | | 85° C | 250° C | | 85° C | 250° C |
| Austr. -Gove | 1,25 | 1,1 | 1,2 | 1,1 | <0,02 | 0,05-0,1 |
| Austr. -Weipa | 0,94 | 0,8 | 1,0 | 1,1 | <0,02 | 0,10 |
| Afrika -Boké | 1,09 | 0,3 | 0,4 | 1,1 | <0,02 | 0,05-0,1 |
| Jamaica | 1,30 | 1,1 | 1,3 | 1,4 | <0,02 | 0,15 |

Angaben in der Tabelle 4 zeigen das Ausmaß der Umwandlung von organischem Kohlenstoff zu Natriumoxalat sowohl bei 85° C als auch 250° C. Die Natriumoxalat-Konzentration in der Lauge wurden durch jeden thermisch behandelten Bauxit unabhängig von dessen Provenienz auf weniger als 0,02 g/l bei 85° C gesenkt, was in allen Fällen eine Herabsetzung von mehr als 90% bedeutet. Bei 250° C fand eine ähnliche Senkung statt.

Analysen mittels Hochdruckflüssigkeitchromatographie (HPLC) zeigen, daß die Extrakte des organischen Kohlenstoffs als "Huminextrakte" charakterisiert werden können. In anderen Worten: es wurde wenig oder nichts von den Substanzen mit organischem Kohlenstoff zu etwas anderem als Natriumoxalat abgebaut. Insbesondere ist zu beachten, daß etwa 75 bis 90% des schlußendlich aus unbehandeltem Bauxit entstandenen (d.h. bei 250° C) Natriumoxalats bereits bei 85° C anwesend waren.

Andererseits haben die thermisch behandelten Bauxite kein meßbares Natriumoxalat bei 85° C in alkalischer Lauge entstehen lassen. Die thermische Bauxitbehandlung zerstört offenbar den Anteil an organischem Kohlenstoff, der schnell bei 85° C zu Natriumoxalat umgewandelt wird, während die Fähigkeit, Natriumoxalat zu bilden, bei den im Bauxit nach thermischer Behandlung verbleibenden organischen Substanzen relativ niedrig ist.

Beispiel 2

Weipa-Bauxit wurde als Beispiel für weiterreichende vorteilhafte Aspekte der vorliegenden Erfindung verwendet. Insbesondere wurden weitere Versuche betreffend die Temperatur/Zeit-Bedingungen für die thermische Bauxitbehandlung und das nachfolgende Löslichkeitsverhalten der Bauxite in der alkalischen Aluminatlauge aus dem Bayer-Verfahren durchgeführt.

Proben von Weipa-Bauxit wurden auf eine Korngröße < 63 µm gemahlen und thermisch behandelt, um die Einwirkung auf den Gehalt des organischen Kohlenstoffs und das Verhalten bei der Auflösung in der alkalischen Aluminatlauge aus dem Bayer-Verfahren zu untersuchen. Die Ausgangszusammensetzung der Lauge war $Na_2O_{frei}$ - 144 g/l; $Na_2O_{Karb}$ - 19,6 g/l; $Al_2O_3$ 61 g/l.

Dieser Bauxit wurde entsprechend dem Beispiel 1 behandelt.

Die Ergebnisse werden in Tab. 5 wiedergegeben:

Tabelle 5

| Temp. | Zeit | Org. Kohlenst. | Auflösung in alkal. Aluminatlauge (g/l) bei 85° C * | | | |
|---|---|---|---|---|---|---|
| (° C) | (Min.) | (%) | 30 | 60 | 120 | 240 (Min.) |
| 380 | 20 | 0,16 | 124,2 | 134,9 | 140,0 | 147,8 |
| 400 | 30 | 0,12 | 97,0 | 108,1 | 120,5 | 134,6 |
| 400 | 60 | 0,05 | 90,5 | 96,3 | 106,6 | 115,0 |
| 500 | 30 | < 0,02 | 84,6 | 89,2 | 92,7 | 99,6 |
| 600 | 30 | < 0,02 | 83,3 | 88,0 | 92,0 | 96,8 |
| Bauxite | - | 0,25 | 120,2 | .... | .... | 120,5 |

* Angaben beziehen sich auf $Na_2O_{frei}$ - 138 g/l.

Die Ergebnisse zeigen, daß die thermische Behandlung von Weipa-Bauxit bei Temperaturen unterhalb 400° C Hydrargillit in eine löslichere Aluminiumoxidform (147,8 vs. 120,5) umwandelte. Die Löslichkeit war auch höher nach einer thermischen Behandlung bei 400° C in 30 Minuten, obwohl die Auflösungsgeschwindigkeit signifikant langsamer wurde. Längere Verweilzeiten bei 400° C und höhere Temperaturen führen zur Minderung der Löslichkeit und Senkung der Auflösungsgeschwindigkeit.

Wie die Angaben in den obigen Tabellen 1 bis 5 zeigen, senkte die thermische Behandlung der tropischen Bauxite bei relativ niedrigen Temperaturen (d.h. 300° C bis 400° C) nicht nur den Gehalt an organischem Kohlenstoff, sondern wandelt auch den in den Bauxiten enthaltenen Hydrargillit in bedeutendem Ausmaß in eine Aluminiumoxidform um, die in alkalischer Aluminatlauge um mindestens 25% löslicher als der Hydrargillit ist.

Durch die Arbeitsweise gemäß der vorliegenden Erfindung werden in tropischen Bauxiten mit einem relativ breiten Bereich der Gehalte an organischem Kohlenstoff, d.h. 0,17 - 0,48%, diese Gehalte zu einem relativ engen Bereich von 0,10 - 0,14% (bezogen auf den Ausgangsbauxit) gesenkt. Darüberhinaus wird dadurch eine unverhältnismäßig große Senkung der Fähigkeit zur Natriumoxalatbildung bis in den Bereich von 1,1 - 4,3% erreicht. Die Bedeutung dieser relativ engen Bereiche liegt darin, daß Bauxite aus verschiedenen Lagerstätten mit unterschiedlichen Gehalten an organischem Kohlenstoff und mit unterschiedlichem Verhalten bezüglich des Natriumoxalats durch diese thermische Behandlung in einen Zustand gebracht werden, der die Verarbeitungsmöglichkeit und den Anlagenbetrieb relativ unabhängig macht von der Bauxitherkunft und dem Gehalt an organischem Kohlenstoff. Zusätzlich wird noch vorteilhafterweise die Löslichkeit verbessert, indem der Hydrargillit in eine löslichere Form umgewandelt wird.

Dadurch erbringt die Arbeitsweise gemäß der vorliegenden Erfindung Vorteile bei der industriellen Verarbeitung in großem Maßstab.

Die Erfindung wurde oben beschrieben unter Bezugnahme auf die bevorzugten Durchführungsweisen. Jedoch sollte verstanden werden, daß manche Zusätze und Veränderungen dem Fachmann unter Berücksichtigung der vorliegenden Beschreibung ersichtlich sein werden, ohne daß der Umfang der vorliegenden Erfindung verlassen wird.

## Ansprüche

1. Verfahren zur Senkung des Gehalts an organischem Kohlenstoff im Bauxit bei gleichzeitiger Erhöhung der Löslichkeit in einer alkalischen Aluminatlauge, gekennzeichnet durch

1) Erhitzen eines Bauxitmaterials auf 300° C -400° C während 10 - 120 min zwecks Zerstörung eines Teils des Gehaltes an organischem Kohlenstoff,

(2) Umwandlung des Hydrargillits in eine röntgen-armorphe Form, die besser löslich in der alkalischen Aluminatlauge ist.

2. Verfahren nach Anspruch 1, dadurch gekennzeichnet, daß der Bauxit etwa 20 - 30 Minuten lang auf eine Temperatur von etwa 360° C - 380° C erhitzt wird.

3. Verfahren nach einem der vorhergehenden Ansprüche, dadurch gekennzeichnet, daß man die Umwandlungsgeschwindigkeit des organischen Kohlenstoffs zu Natriumoxalat auf weniger als 5%, bezogen auf das ursprüngliche Bauxitgewicht, herabsetzt.

4. Anwendung des Verfahrens zur Senkung des Gehalts an organischem Kohlenstoff im Bauxit bei gleichzeitiger Erhöhung der Löslichkeit in einer alkalischen Aluminatlauge auf die Herstellung von Aluminiumoxid nach den Bayerverfahren nach einem der vorhergehenden Ansprüche, dadurch gekennzeichnet, daß die Aluminatlauge nach Zugabe des vorerhitzten Bauxits, bei Temperaturen < 110° C aufgeschlossen wird und auf ein Molverhältnis

$$\frac{Na_2O}{Al_2O_3}$$

< 1,6 eingestellt wird.

Europäisches Patentamt

# EUROPÄISCHER RECHERCHENBERICHT

Nummer der Anmeldung

EP 89 12 2142

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1383136 (MITSUI MINING & SMELTING)<br>* Seite 2, Zeilen 4 - 56; Ansprüche 1, 2 * | 1, 2 | C01F7/06<br>C01F7/47 |
| X | CHEMICAL ABSTRACTS, vol. 79, no. 16, 22 Oktober 1973<br>Columbus, Ohio, USA<br>S. Kobayashi: "Roasting bauxite for removal of organic matters."<br>& JP-A-73039317 (MITSUI MINING & SMELTING)<br>* Zusammenfassung * | 1, 2 | |
| A | DE-B-1014087 (KAISER ALUMINIUM) | | |

RECHERCHIERTE SACHGEBIETE (Int. Cl.5)

C01F

Der vorliegende Recherchenbericht wurde für alle Patentansprüche erstellt

| Recherchenort | Abschlußdatum der Recherche | Prüfer |
|---|---|---|
| DEN HAAG | 19 MAERZ 1990 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

1

EPO FORM 1503 03.82 (P0403)